# EUROPEAN PATENT SPECIFICATION

(11) **EP 1 816 029 B1**
(45) Date of publication and mention of the grant of the patent: **22.07.2009**
(21) Application number: 07270006.5
(22) Date of filing: 24.01.2007
(51) Int. Cl.: B60N 3/10, B60R 7/06

(54) **An Instrument Panel for A Motor Vehicle**
Armaturenbrett für Kraftfahrzeug
Tableau de bord pour véhicule à moteur

(30) Priority: 01.02.2006 GB 0602018
(43) Date of publication of application: 08.08.2007
(73) Proprietor: Ford Global Technologies, LLC, Dearborn, MI 48126 (US)
(72) Inventor: Turner, Amanda, Chelmsford,Essex,CM3 8JG, (GB)
(74) Representative: Grunfeld, David Peter

(56) References cited:
- EP-A1- 0 622 270
- DE-A1- 4 211 434
- DE-A1- 10 112 219
- US-A- 4 105 246
- US-A- 4 902 061
- US-A- 5 634 621

## Description

This invention relates to motor vehicles and in particular to an instrument panel for a motor vehicle.

It is known that drivers of commercial vehicles such as vans and lorries spend a large part of their working lives in the cab of their vehicle and that during each day they have to perform a number of tasks such as preparing delivery notes, recording deliveries made, eating and drinking. It would therefore be desirable to provide a compact means that can assist a driver in performing these tasks and which can be stowed when not required for use.

DE 10112219 Al discloses a multiple cup holder which may be folded out from a console of a vehicle.

It is an object of this invention to provide an improved instrument panel for a motor vehicle that assists a driver in performing one or more routine tasks.

According to a first aspect of the invention there is provided an instrument panel for a motor vehicle wherein the instrument panel includes a utility tray having a first recess formed therein which faces upwardly when the utility tray is in the deployed position and at least one aperture to accommodate a receptacle for a drink, the utility tray being pivotally connected to the instrument panel so as to permit the utility tray to be rotated from a stowed position to a deployed position in which at least part of the utility tray extends outwardly from a front surface of the instrument panel wherein, when in the stowed position, the utility tray is received in a recess in an upper surface of the instrument panel, the depth of the recess in the upper surface of the instrument panel being such that, when the utility tray is in the stowed position, a receptacle for a drink placed in an aperture can extend downwardly from the aperture a short distance before contacting the surface of the recess in the instrument panel so as to permit a receptacle for a drink to be supported by the utility tray even when the utility tray is in the stowed position.

This has the advantage that receptacles for drinks that are of a smaller diameter than the aperture or apertures in the utility tray can be securely transported by using the utility tray in the stowed position and larger receptacles such as drinking cups that cannot fully pass through the aperture or apertures can be transported with the utility tray in the deployed position thereby allowing receptacles greatly differing sizes to be transported. In addition, receptacles that have parallel sides such as cans can be supported when the utility tray is in the stowed position.

Each aperture may be tapered such that the diameter of the aperture decreases from a first end that is uppermost when the utility tray is in the deployed position to a second end.

In which case, the receptacle for a drink may be a tapered cup.

The or each aperture may be positioned in the utility tray such that, when the utility tray is in the deployed position, any receptacle for a drink placed in the aperture will extend downwardly from the aperture without contacting the front surface of the instrument panel.

The first recess may define a flat surface suitable for use as a writing table and a second recess is formed in the first recess for accommodating a writing device.

The utility tray may be pivotally connected to the instrument panel by means of two pins arranged on a common axis, each of the pins being engaged with a respective aperture formed in the instrument panel.

When in the stowed position, no part of the utility tray may extend outwardly from the front surface of the instrument panel and an upper surface of the utility tray is aligned with the surrounding upper surface of the instrument panel so that a substantially continuous surface is produced.

This has the advantage that there are no projecting edges to cause injury to an occupant of the vehicle in the event of a vehicle collision.

The utility tray may be positioned substantially centrally in the instrument panel so that it is accessible to both a driver and a passenger of the motor vehicle to which the instrument panel is fitted.

According to a second aspect of the invention there is provided a motor vehicle having an instrument panel in accordance with said first aspect of the invention.

The invention will now be described by way of example with reference to the accompanying drawing of which:-
Fig.1 is a pictorial view of a central part of an instrument panel for a motor vehicle according to the invention showing a utility tray in a stowed position;
Fig.2 is a side pictorial view of the central part of the instrument panel shown in Fig.1 showing the utility tray in a deployed position; and
Fig.3 is a plan view of the central part of the instrument panel showing the utility tray in the deployed position.

With reference to the figures there is shown a dashboard or instrument panel 5 for a motor vehicle. The instrument panel 5 has a transversely extending surface 6 defining a rear edge 14 which abuts against a lower edge of a windscreen or windshield 8 of the motor vehicle. A number of vents 7 are formed in the transversely extending surface 6 of the instrument panel 5 to allow air to pass from a ventilation system (not shown) onto the windshield 8 for demisting purposes.

In this case two storage box covers 9, 10 form in combination with the transversely extending surface 6 an upper surface of the instrument panel 5.

The instrument panel 5 has a front surface 15 in which is formed two vents 11 which are connected to the ventilation system to provide face level ventilation for a driver or passenger of the motor vehicle to which the instrument panel 5 is fitted. An audio system control panel 12 is also fitted in the front surface 15 of the instrument panel 5.

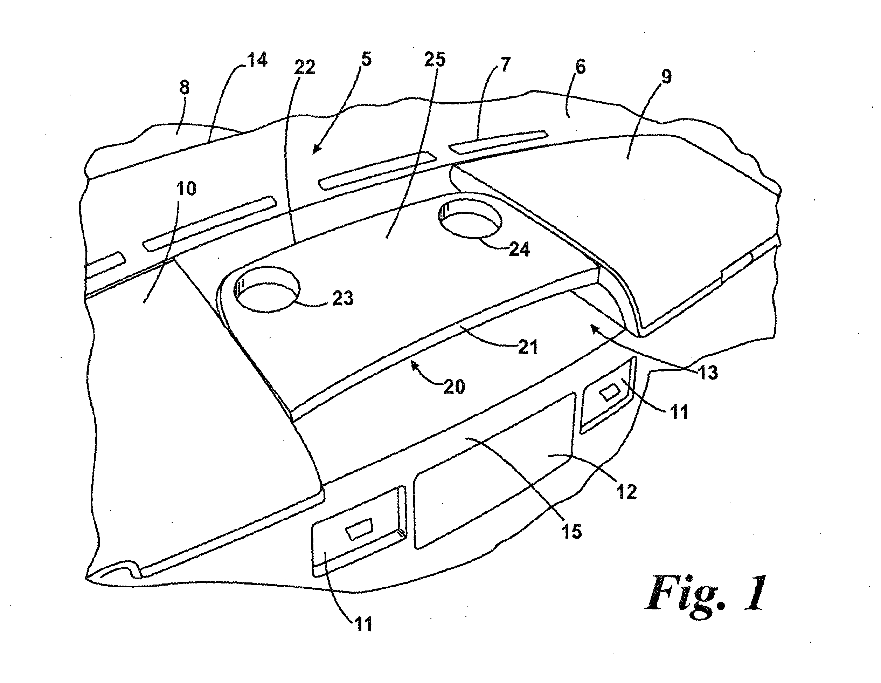

A recess 13 is formed in the upper surface of the instrument panel 5 in which is rotatably mounted a utility tray 20. The utility tray 20 has a first edge 21 which faces towards the front surface 15 of the instrument panel 5 and a second edge 22 which faces towards the windshield 8 when the utility tray 20 is stowed as shown in Fig.1.

Two apertures 23, 24 are formed towards the second edge 22, each of the apertures 23, 24 is sized and shaped to accommodate a receptacle for a drink such as a tapered cup of the type used to dispense soft drinks.

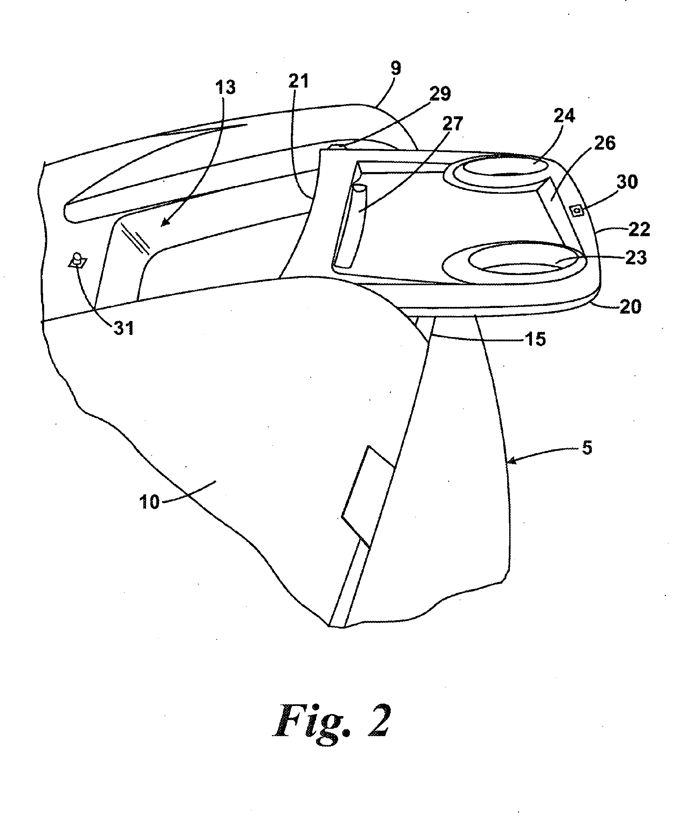

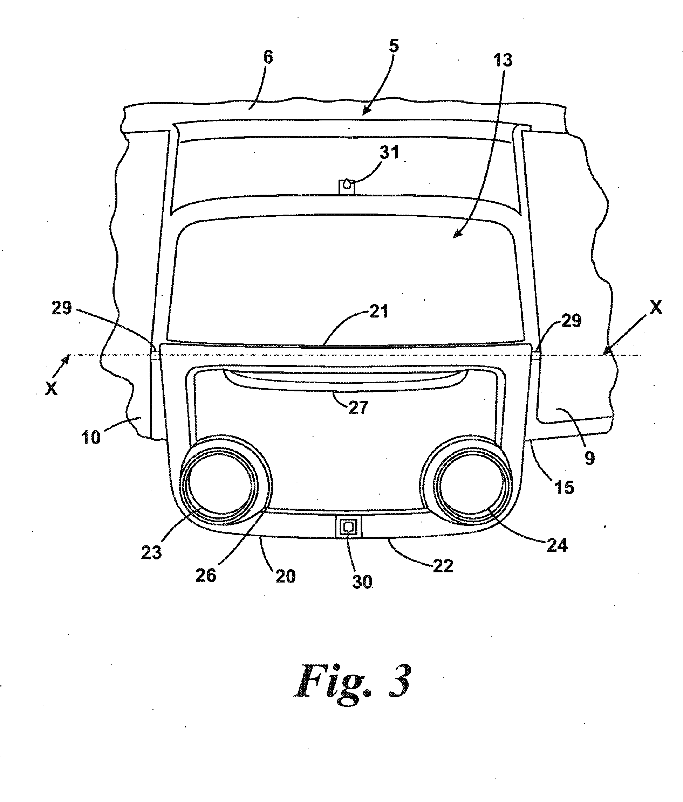

Each of the apertures 23, 24 is tapered such that the diameter of the aperture 23, 24 decreases from a first end that is uppermost when the utility tray 20 is in a deployed position as shown in Figs. 2 and 3 to a second end which is uppermost when the utility tray is stowed, as shown in Fig.1.

The tapered shape of each aperture 23, 24 allows a tapered cup to be inserted easily into the respective aperture 23, 24 when required by providing a centering aid but also grips the outer surface of the cup when it has been inserted to reduce rattles or undesirable movement of the cup. Ideally the included angle of the taper in each aperture should be similar to that of the tapered cup for which the apertures 23, 24 are intended to accommodate and support. An exact matching of the taper angles is not critical but it is important that the maximum diameter of the cup is less than the minimum diameter of the aperture 23, 24 to prevent the cup passing directly through the aperture 23, 24 and the minimum diameter of the aperture 23, 24 must be sufficiently large to allow a significant percentage of the cup to pass therethrough before the cup is gripped by the aperture 23, 24 in order to ensure that the cup is stably supported. In general approximately 40% of the total length of a cup is required to project through the aperture 23, 24 to ensure that when the cup is full the centre of gravity of the drink contained therein is level with or below the aperture 23, 24.

The utility tray 20 is pivotally connected to the instrument panel 5 by means of two pins 28, 29 arranged on a common axis x-x. Each of the pins 28, 29 is engaged with a respective aperture (not visible) formed in the instrument panel 5. A latch pin 31 having a ball shaped head is fastened to the laterally extending surface 7 for engagement with a detent 30 formed in the utility tray 20.

The utility tray 20 has an upper surface 25 which, when the utility tray 20 is in the stowed position, is aligned with the surrounding upper surface of the instrument panel 5 which in this case are the two storage box covers 9, 10 and the transversely extending surface 6 so that a substantially continuous surface is produced, as can be seen with reference to Fig.1

When the utility tray 20 is in the stowed position the smaller diameter end of the apertures 23, 24 is facing upwards but because of the recess 13 it is possible to store other drinks containers such as cans or bottles in the apertures 23, 24. That is to say a receptacle for a drink placed in one of the apertures 23, 24 can extend downwardly from the respective aperture 23, 24 a short distance before contacting the surface of the recess 13 in the instrument panel 5 so as to permit it to be supported by the utility tray 20 even though the utility tray 20 is in the stowed position. However the location provided in this case is less efficient than when the utility tray 20 is in the deployed position and a tapered cup is located in the aperture 23, 24.

When the utility tray 20 is in the deployed position not only are the larger diameter ends of the two apertures 23, 24 facing upwards but two recesses 26, 27 in a lower surface of the utility tray 20 are also now facing upwards.

The first recess 26 covers a large percentage of the lower surface of the utility tray 20 and provides a flat surface upon which paperwork can be completed or in which food items can be placed for temporary storage.

The second recess 27 is formed within the first recess 26 and is intended for the temporary storage of a writing device such as a pen or pencil and, although not shown, may include a clip to hold a pen or pencil in the second recess 27 ready for use. That is to say, the first recess 26 defines a flat surface suitable for use as a writing table and the second recess 27 can be used to accommodate a writing device such as a pen or pencil.

When the utility tray 20 is in the stowed position no part of the utility tray 20 extends outwardly from the front surface 15 of the instrument panel 5 and so no projecting edge is produced against which a body part could impinge during a motor vehicle collision.

However, when the utility tray 20 is in the deployed position, the positioning of the pins 28, 29 towards the first edge 21 ensure that cup placed in one of the apertures 23, 24 will extend downwardly from the respective aperture 23, 24 without contacting the front surface 15 of the instrument panel 5. This is important because it ensures that the front surface 15 of the instrument panel 5 does not interfere with the insertion or removal of a cup from one of the two apertures 23, 24. In addition, because the utility tray 20 extends outwardly from the front surface of the instrument panel 5, any cup located in one of the two apertures 23, 24 will be positioned closer to a potential user of the cup.

Preferably, as shown, the utility tray 20 is positioned substantially centrally in the instrument panel 5 so that it is accessible to both a driver and a passenger of the motor vehicle to which the instrument panel 5 is fitted.

It will be appreciated that the space provided in the recess 13 below the utility tray 20 can, if required, be used as an additional stowage area for storing paperwork or the like.

Operation of the utility tray 20 is as follows, from the stowed position a potential user grasps the second edge 22 of the utility tray 20 and lifts it upwards and then forwards causing the utility tray 20 to rotate about the axis x-x until it reaches the deployed position where it rests upon two abutments formed in the recess 13.

Although the use of two tapering apertures provides a cost effective means for supporting a tapering cup such as the paper cups often used to dispense soft drinks including tea and coffee it will be appreciated that the invention is not limited to the use of tapering apertures and alternatively gripping means of some form could be provided in each aperture to permit receptacles for drinks of a non-tapering form such as cans and bottles to be supported.

Although the invention is particularly relevant to use in commercial vehicles it will be appreciated that it can be also be applied with advantage to other forms of motor vehicle such as passenger cars, sports utility vehicles and multi-purpose vehicles.

It will be appreciated by those skilled in the art that although the invention has been described by way of example with reference to one or more embodiments it is not limited to the disclosed embodiments and that modifications to the disclosed embodiments or alternative embodiments could be constructed without departing from the scope of the invention.

## Claims

1. An instrument panel (5) for a motor vehicle wherein the instrument panel (5) includes a utility tray (20) having a first recess (26) formed therein which faces upwardly when the utility tray (20) is in the deployed position and at least one aperture (23, 24) to accommodate a receptacle for a drink, the utility tray (20) being pivotally connected to the instrument panel (5) so as to permit the utility tray (20) to be rotated from a stowed position to a deployed position in which at least part of the utility tray (20) extends outwardly from a front surface (15) of the instrument panel (5), **characterised in that,** when in the stowed position, the utility tray (20) is received in a recess (13) in an upper surface of the instrument panel (5), the depth of the recess (13) in the upper surface of the instrument panel (5) being such that, when the utility tray (20) is in the stowed position, a receptacle for a drink placed in an aperture (23, 24) can extend downwardly from the aperture (23, 24) a short distance before contacting the surface of the recess (13) in the instrument panel (5) so as to permit a receptacle for a drink to be supported by the utility tray (20) even when the utility tray (20) is in the stowed position.

2. An instrument panel (5) as claimed in claim 1, **characterised in that** each aperture (23, 24) is tapered such that the diameter of the aperture (23, 24) decreases from a first end that is uppermost when the utility tray (20) is in the deployed position to a second end.

3. An instrument panel (5) as claimed in claim 2, **characterised in that** the or each aperture (23, 24) is positioned in the utility tray (20) such that, when the utility tray (20) is in the deployed position, any receptacle for a drink placed in the aperture (23, 24) will extend downwardly from the aperture (23, 24) without contacting the front surface (15) of the instrument panel (5).

4. An instrument panel (5) as claimed in any of claims 1 to 3, **characterised in that** the first recess (26) defines a flat surface suitable for use as a writing table and a second recess (27) is formed in the first recess (26) for accommodating a writing device.

5. An instrument panel (5) as claimed in any of claims 1 to 4, **characterised in that** the utility tray (20) is pivotally connected to the instrument panel (5) by means of two pins (28, 29) arranged on a common axis, each of the pins (28, 29) being engaged with a respective aperture formed in the instrument panel (5).

6. An instrument panel (5) as claimed in any of claims 1 to 5, **characterised in that** when in the stowed position, no part of the utility tray (20) extends outwardly from the front surface (15) of the instrument panel (5) and an upper surface of the utility tray (20) is aligned with the surrounding upper surface of the instrument panel (5) so that a substantially continuous surface is produced.

7. An instrument panel (5) as claimed in any of claims 1 to 6, **characterised in that** the utility tray (20) is positioned substantially centrally in the instrument panel (5) so that it is accessible to both a driver and a passenger of the motor vehicle to which the instrument panel (5) is fitted.

8. A motor vehicle having an instrument panel (5) according to any of claims 1 to 7.

## Patentansprüche

1. Armaturenbrett (5) für ein Kraftfahrzeug, wobei das Armaturenbrett (5) ein Gebrauchstablett (20) aufweist, in dem eine erste Ausnehmung (26) ausgebildet ist, die nach oben weist, wenn das Gebrauchstablett (20) in der Einsatzposition ist, und das mindestens eine Öffnung (23, 24) hat, um ein Behältnis für ein Getränk unterzubringen, wobei das Gebrauchstablett (20) schwenkbar mit dem Armaturenbrett (5) verbunden ist, damit das Gebrauchstablett (20) aus einer verstauten Position in eine Einsatzposition gedreht werden kann, in der sich mindestens ein Teil des Gebrauchstabletts (20) von einer Vorderfläche (15) des Armaturenbretts (5) nach außen erstreckt, **dadurch gekennzeichnet, dass** das Gebrauchstablett (20) in einer Ausnehmung (13) in einer oberen Fläche des Armaturenbretts (5) aufgenommen ist, wenn es in der verstauten Position ist, wobei die Ausnehmung (13) in der oberen Fläche des Armaturenbretts (5) so tief ist, dass sich ein Behältnis für ein Getränk, das in eine Öffnung (23, 24) platziert worden ist, von der Öffnung (23, 24) eine kurze Strecke nach unten erstrecken kann, wenn das Gebrauchstablett (20) in der verstauten Position ist, bevor es die Oberfläche der Ausnehmung (13) im Armaturenbrett (5) kontaktiert, damit ein Behältnis für ein Getränk vom Gebrauchstablett (20) gestützt werden kann, selbst wenn das Gebrauchstablett (20) in der verstauten Position ist.

2. Armaturenbrett (5) nach Anspruch 1, **dadurch gekennzeichnet, dass** sich jede Öffnung (23, 24) so verjüngt, dass der Durchmesser der Öffnung (23, 24) von einem ersten Ende, das am weitesten oben liegt, wenn das Gebrauchstablett (20) in der Einsatzposition ist, zu einem zweiten Ende hin abnimmt.

3. Armaturenbrett (5) nach Anspruch 2, **dadurch gekennzeichnet, dass** die oder jede Öffnung (23, 24) so im Gebrauchstablett (20) positioniert ist, dass sich jedes Behältnis für ein Getränk, das in die Öffnung (23, 24) platziert worden ist, von der Öffnung (23, 24) nach unten erstreckt, ohne die Vorderfläche (15) des Armaturenbretts (5) zu kontaktieren, wenn das Gebrauchstablett (20) in der Einsatzposition ist.

4. Armaturenbrett (5) nach einem der Ansprüche 1 bis 3, **dadurch gekennzeichnet, dass** die erste Ausnehmung (26) eine flache Fläche definiert, die sich für den Einsatz als Schreibtisch eignet, und eine zweite Ausnehmung (27) in der ersten Ausnehmung (26) ausgebildet ist, um ein Schreibgerät aufzunehmen.

5. Armaturenbrett (5) nach einem der Ansprüche 1 bis 4, **dadurch gekennzeichnet, dass** das Gebrauchstablett (20) mittels zweier Zapfen (28, 29), die auf einer gemeinsamen Achse angeordnet sind und jeweils mit einer jeweiligen im Armaturenbrett (5) gebildeten Öffnung in Eingriff stehen, schwenkbar mit dem Armaturenbrett (5) verbunden ist.

6. Armaturenbrett (5) nach einem der Ansprüche 1 bis 5, **dadurch gekennzeichnet, dass** sich kein Teil des Gebrauchstabletts (20), wenn dieses sich in der verstauten Position befindet, von der Vorderfläche (15) des Armaturenbretts (5) nach außen erstreckt und eine obere Fläche des Gebrauchstabletts (20) auf die umgebende obere Fläche des Armaturenbretts (5) ausgerichtet ist, so dass sich eine im Wesentlichen durchgehende Oberfläche ergibt.

7. Armaturenbrett (5) nach einem der Ansprüche 1 bis 6, **dadurch gekennzeichnet, dass** das Gebrauchstablett (20) im Wesentlichen mittig im Armaturenbrett (5) positioniert ist, so dass sowohl ein Fahrer als auch ein Fahrgast des Kraftfahrzeugs, in dem das Armaturenbrett (5) angebracht ist, darauf zugreifen können.

8. Kraftfahrzeug mit einem Armaturenbrett (5) nach einem der Ansprüche 1 bis 7.

## Revendications

1. Tableau de bord (5) pour un véhicule automobile, dans lequel le tableau de bord (5) comporte une tablette utilitaire (20) dans laquelle est formé un premier retrait (26) qui est tourné vers le haut lorsque la tablette utilitaire (20) est dans la position déployée et au moins une ouverture (23, 24) pour recevoir un récipient pour une boisson, la tablette utilitaire (20) étant connectée de manière pivotante au tableau de bord (5) de manière à permettre à la tablette utilitaire (20) de tourner d'une position rangée dans une position déployée dans laquelle au moins une partie de la tablette utilitaire (20) s'étend vers l'extérieur depuis une surface avant (15) du tableau de bord (5), **caractérisé en ce que,** dans la position rangée, la tablette utilitaire (20) est insérée dans un retrait (13) dans une surface supérieure du tableau de bord, la profondeur du retrait (13) dans la surface supérieure du tableau de bord (5) étant telle que lorsque la tablette utilitaire (20) est dans la position rangée, un récipient pour une boisson placé dans une ouverture (23, 24) puisse s'étendre vers le bas depuis l'ouverture (23, 24) sur une courte distance avant de venir en contact avec la surface du retrait (13) dans le tableau de bord (5) de manière à permettre à un récipient pour une boisson d'être supporté par la tablette utilitaire (20) même lorsque la tablette utilitaire (20) est dans la position rangée.

2. Tableau de bord (5) selon la revendication 1, **caractérisé en ce que** chaque ouverture (23, 24) est filetée de telle sorte que le diamètre de l'ouverture (23, 24) diminue depuis une première extrémité qui est le plus en haut lorsque la tablette utilitaire (20) est dans la position déployée jusqu'à une deuxième extrémité.

3. Tableau de bord (5) selon la revendication 2, **caractérisé en ce que** la ou chaque ouverture (23, 24) est positionnée dans la tablette utilitaire (20) de telle sorte que lorsque la tablette utilitaire (20) est dans la position déployée, tout récipient pour une boisson placé dans l'ouverture (23, 24) s'étende vers le bas depuis l'ouverture (23, 24) sans venir en contact avec la surface avant (15) du tableau de bord (5).

4. Tableau de bord (5) selon l'une quelconque des revendications 1 à 3, **caractérisé en ce que** le premier retrait (26) définit une surface plane appropriée pour l'utilisation en tant que table d'écriture et un deuxième retrait (27) est formé dans le premier retrait (26) pour recevoir un dispositif d'écriture.

5. Tableau de bord (5) selon l'une quelconque des revendications 1 à 4, **caractérisé en ce que** la tablette utilitaire (20) est connectée de manière pivotante au tableau de bord (5) au moyen de deux goupilles (28, 29) agencées sur un axe commun, chacune des goupilles (28, 29) étant engagée avec une ouverture respective formée dans le tableau de bord (5).

6. Tableau de bord (5) selon l'une quelconque des revendications 1 à 5, **caractérisé en ce que** lorsqu'elle est dans la position rangée, aucune partie de la tablette utilitaire (20) ne s'étend vers l'extérieur depuis la surface avant (15) du tableau de bord (5) et une surface supérieure de la tablette utilitaire (20) est alignée avec la surface supérieure environnante du tableau de bord (5) de sorte qu'une surface substantiellement continue soit produite.

7. Tableau de bord (5) selon l'une quelconque des revendications 1 à 6, **caractérisé en ce que** la tablette utilitaire (20) est positionnée substantiellement centralement dans le tableau de bord (5) de sorte qu'elle soit accessible à la fois à un conducteur et à un passager du véhicule automobile dans lequel le tableau de bord (5) est installé.

8. Véhicule automobile ayant un tableau de bord (5) selon l'une quelconque des revendications 1 à 7.
